(19) Europäisches Patentamt
European Patent Office
Office européen des brevets

(11) **EP 1 289 120 A1**

(12) **EUROPÄISCHE PATENTANMELDUNG**

(43) Veröffentlichungstag:
**05.03.2003  Patentblatt 2003/10**

(51) Int Cl.$^7$: **H02P 21/00**

(21) Anmeldenummer: **01120356.9**

(22) Anmeldetag: **24.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Götze, Thomas**
  **09113 Chemnitz (DE)**
• **Johanning, Hans-Peter**
  **97299 Zell am Main (DE)**
• **Schaefer, Heinz, Dr.**
  **97230 Estenfeld (DE)**

(54) **Verfahren zur impulsartigen Erhöhung des Drehmomentes eines Asynchronmotors**

(57)    Ohne Überlastung bzw. Notwendigkeit einer Vergrößerung der installierten Maschinen- bzw. Energiespeicherkapazität kann auf einfache Weise das Losbrechmoment beim Startvorgang einer mit einem Starter-Generator, insbesondere einer feldorientierten Asynchronmaschine (ASM), gekoppelten Verbrennungsmaschine dadurch wesentlich erhöht werden, dass zunächst die feldbildende Vektor-Komponente ($I_{ds}$) des Ständerstroms unter entsprechender Reduzierung der drehfeldbildenden Vektor-Komponente ($I_{qs}$) des Ständerstroms im Sinne einer Übererregung bis maximal zur Sättigung erhöht und anschließend nach Abschalten der drehfeldbildenden Vektor-Komponente ($I_{ds}$) während der durch die Rotorzeitkonstante bestimmten allmählichen Abnahme der Erregung auf ihren betriebsoptimalen Dauerbetriebswert die drehfeldbildende Vektor-Komponente ($I_{qs}$) entsprechend überhöht wird.

FIG 2

EP 1 289 120 A1

**Beschreibung**

Die Erfindung bezieht sich auf ein Verfahren zur impulsartigen Erhöhung des Drehmomentes eines mit feldorientierter Regelung, insbesondere über einen Umrichter, gespeisten Asynchronmotors; ein derartiges Verfahren ist insbesondere zur Überwindung des Losbrechmomentes einer mit einem Starter-Generator in Form einer Asynchronmaschine koppelbaren Verbrennungsmaschine in einem Kraftfahrzeug vorgesehen.

Durch die DE 37 44 905 C2 ist ein Verfahren zur feldorientierten Steuerung eines umrichtergespeisten Asynchronmotors zu dem Zwecke bekannt, eine optimale Nutzung bei minimalem Ständerstrom und guter Linearität der Drehzahleinstellung zu erreichen; dazu ist vorgesehen, dass im Grunddrehzahlbereich die drehmomentbildende Komponente sowie die feldbildende Komponente des Ständerstroms gleich groß eingestellt werden und gleichzeitig proportional dem Verhältnis von DrehmomentSollwert zu Läuferfluss-Sollwert verändert werden sowie zum Zeitpunkt einer kurzzeitigen zusätzlichen Erhöhung des Drehmoments die feldbildende Komponente des Ständerstroms abgeschaltet und der Sollwert der drehmomentbildenden Komponente des Ständerstroms um einen Wert erhöht wird, der der feldbildenden Komponente des Ständerstroms entspricht.

Gemäß Aufgabe vorliegender Erfindung soll mit geringem Aufwand unter Berücksichtigung der in einem Kraftfahrzeug begrenzten Einbauräume und Batteriekapazitäten ein erhöhtes Drehmoment der Asynchronmaschine zum Kaltstart einer, vorzugsweise direkt mit seiner Kurbelwelle an die Starter-Generator-Welle gekoppelten, Verbrennungsmaschine gewährleistet werden; das dazu notwendige sogenannte Losbrechmoment (break away torque) kann bei tiefer Temperatur überproportional zunehmen.

Die Lösung der vorgenannten Aufgabe gelingt erfindungsgemäß durch die Lehre des Anspruchs 1; vorteilhafte Ausgestaltungen der Erfindung sind jeweils Gegenstand der Unteransprüche.

Das erfindungsgemäße Verfahren erlaubt, lediglich unter besserer Ausnutzung der an sich vorhandenen elektrischen Maschinen- sowie Umrichterleistung und Batterie-Speicherkapazität eine kurzzeitige Überhöhung der feldbildenden Vektor-Komponente des Ständerstroms bis in den Sättigungsbereich bei gleichzeitiger Minderung, gegebenenfalls bis auf einen Nullwert, der drehmomentbildenden Vektor-Komponente des Ständerstroms. Der derart maximierte Fluss nimmt beim anschließenden kurzzeitigen Nullsetzen der feldbildenden Vektor-Komponente aufgrund der vorhandenen Induktivität nicht schlagartig ab; durch die während dieser Phase nunmehr - ohne Überschreiten des maximalen Ständerstroms - überhöhte drehmomentbildende Vektor-Komponente des Ständerstroms ist in vorteilhafter Weise eine merkliche kurzzeitige impulsartige Erhöhung des Drehmomentes der Asynchronmaschine als Losbrechmoment für den Verbrennungsmotor unmittelbar vor dessen Zündvorgang zur Verfügung stellbar.

Die Erfindung sowie weitere vorteilhafte Ausgestaltungen gemäß Merkmalen der Unteransprüche werden im folgenden anhand schematischer Ausführungsbeispiele in der Zeichnung näher erläutert; darin zeigen:

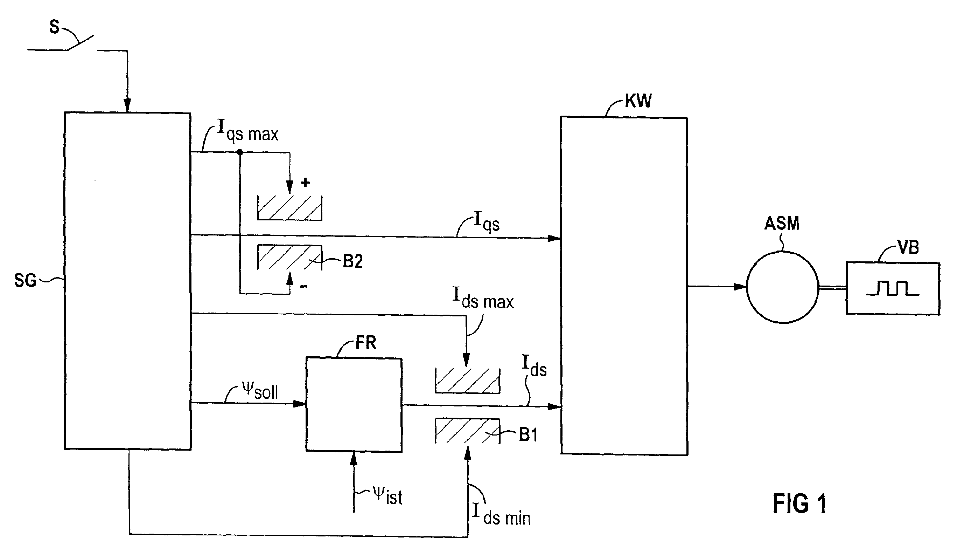

FIG 1 ein Strukturbild zur erfindungsgemäßen Drehmomenterhöhung vor dem eigentlichen Starten der Verbrennungsmaschine;

FIG 2 den entsprechenden zeitlichen Verlauf des Erregerflusses der Asynchronmaschine;

FIG 3 den entsprechenden zeitlichen Verlauf der feldbildenden Komponente des Ständerstroms;

FIG 4 den entsprechenden zeitlichen Verlauf der drehmomentbildenden Komponente des Ständerstroms;

FIG 5 den entsprechenden zeitlichen Verlauf des Drehmomentes der mit einer Verbrennungsmaschine gekoppelten Asynchronmaschine.

Die im folgenden erläuterte erfindungsgemäße impulsartige Erhöhung des Drehmomentes der mit einer Verbrennungsmaschine VB gekuppelten Asynchronmaschine ASM vor der eigentlichen Startzündung im Zeitpunkt Z der Verbrennungsmaschine VB geht aus von einem Sollwertgeber SG zur Vorgabe der feldbildenden und drehmomentbildenden Komponenten des Ständerstroms für eine feldorientierte Regelung bzw. Steuerung einer Asynchronmaschine, wie dies z.B. aus der DE 37 44 905 C2 bzw. DE 31 44 174 A1 bzw. aus dem Buch "Moderne Starter-Generatoren mit Asynchronmaschinen und feldorientierter Regelung", insbesondere Seiten 24-37, expert verlag 1999 bekannt ist.

Nach Auslösung des Startvorgangs durch Betätigung eines Starttasters S werden von einem Sollwertgeber SG Sollwerte für den drehmomentbildenden Ständerstrom $I_{qs}$ sowie einen Soll-Erregerflusswert $\psi_{soll}$ vorgegeben, wobei von einem Flussregler FR aufgrund des vorgegebenen Soll-Erregerflusswertes $\psi_{soll}$ für den Ständer und eines jeweils erfassten Ist-Erregerflusses $\psi_{ist}$ ein entsprechender Sollwert $I_{ds}$ für den feldbildenden Ständerstrom $I_{ds}$ gebildet ist.

Der feldbildende Ständerstrom $I_{ds}$ ist mittels eines ersten Begrenzers B1 auf einen Bereich zwischen einem Maximalwert $I_{ds\,max} = I_{s\,max}$, d.h. dem maximalen Ständerstrom, und einem Minimalwert $I_{ds\,min} \geqq 0$ begrenzbar; der drehmomentbildende Strom $I_{qs}$ ist mittels eines weiteren Begrenzers B2 auf einen Bereich zwischen einem Maximalwert $I_{qs\,max} = \sqrt{I_{s\,max}^2 - I_{ds}^2}\,mit$ $I_{ds} \geq 0$ und einem entsprechenden negativen Minimalwert begrenzbar.

In einem anschließenden Koordinatenwandler KW werden - in an sich bekannter Weise - die entsprechende drehmomentbildende und feldbildende Komponente des Ständerstroms anhand eines feldorientierten Koordinatensystems gebildet und über einen implizierten Umrichter der Asynchronmaschine ASM als entsprechende Strangströme zugeführt.

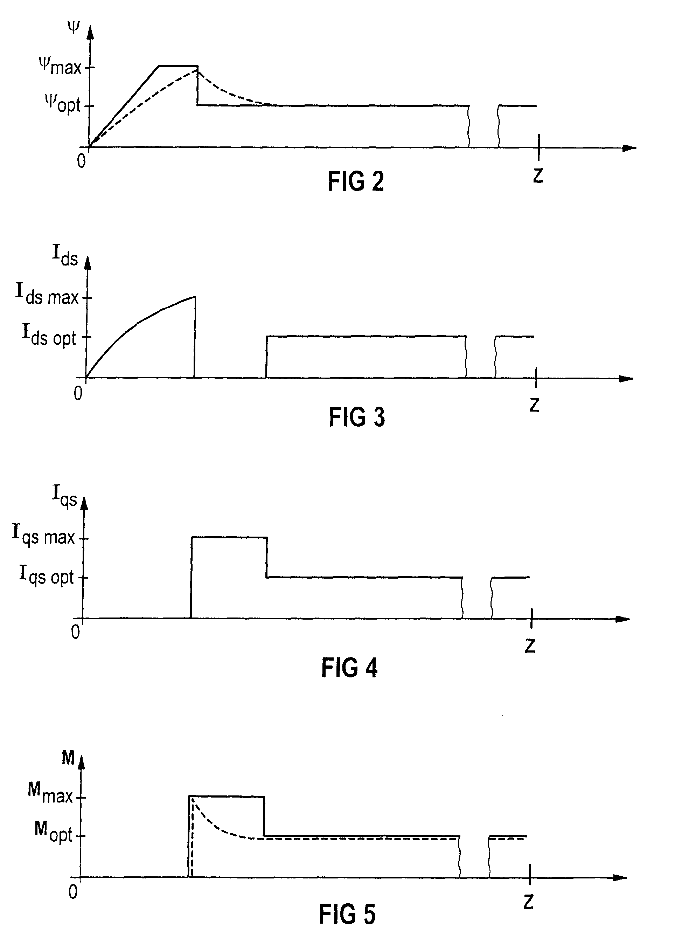

Die erfindungsgemäße vorteilhafte impulsartige Drehmomenterhöhung wird im folgenden nochmals anhand der zeitlichen Abläufe für das Ständerfeld $\psi$ gemäß FIG 2, für den entsprechenden feldbildenden Ständerstrom $I_{ds}$ gemäß FIG 3, für den entsprechenden drehmomentbildenden Ständerstrom $I_{qs}$ gemäß FIG 4 sowie für das sich ergebende Moment M der Asynchronmaschine ASM gemäß FIG 5 erläutert; dabei sind Sollverläufe mit durchgezogener Kontur und Istverläufe mit gestrichelter Kontur wiedergegeben.

Die Asynchronmaschine ASM wird zur Erzeugung des Losbrechmomentes also nicht mit betriebsoptimalem, sondern mit derart maximal möglichem Fluss $\psi_{max}$ bei gleichzeitig bis auf Null reduziertem drehmomentbildenden Ständerstrom $I_{qs} = 0$, vorzugsweise rampenartig, bis zum maximalen Wert des Betrages $I_{ds\ max} = \sqrt{I_{s\ max}^2 - 0^2} = I_{s\ max}$ magnetisiert, wobei $I_{s\ max}$ dem, insbesondere hinsichtlich Maschinen-, Wicklungs- und Umrichterbelastung, maximalen Wert des Ständerstroms entspricht. Der Wert $\psi_{max}$ liegt - wie ersichtlich - deutlich über dem anschließenden betriebsoptimalen Dauerbetriebswert $\psi_{opt}$.

Der betriebsoptimale Dauerbetrieb ist gekennzeichnet durch solche Werte für den drehmomentbildenden Stromvektor $I_{qs}$ des Ständerstroms sowie für den feldbildenden Stromvektor $I_{ds}$ des Ständerstroms, bei denen für das jeweils geforderte Drehmo*ment der gesamte Ständerstrom* $I_s = \sqrt{I_{ds}^2 + I_{qs}^2}$ *minimal ist.*

Nach dem Erreichen von $\psi_{max}$ wird der feldbildende Strom $I_{ds}$ unterbrochen und entsprechend dem maximal zulässigen Ständerstrom $I_s$ nunmehr der drehfeldbildende Strom $I_{qs}$ überhöht bis zu einem maximalen Betrag $I_{qs\ max} = \sqrt{I_{s\ max}^2 - 0^2} = I_{s\ max}$ Aufgrund der physikalischen Tatsache, dass sich der Strom und damit der magnetische Fluss in einer Induktivität nicht schlagartig ändern kann, wird sich der Fluss bei der Vorgabe $I_{ds} = 0$ nicht schlagartig, sondern näherungsweise nach einer e-Funktion mit der Rotorzeitkonstante abbauen.

Da während dieser Phase das Drehmoment $M_{max} \sim \psi_{max} \cdot I_{qs\ max}$ durch den noch sehr hohen Fluss $\psi_{max}$ und den voll zur Verfügung stehenden Strom $I_{qs\ max}$ bestimmt ist, kann also kurzzeitig ein sehr hohes Drehmoment entsprechend $\psi_{max} \gg \psi_{opt}$ und $I_{qs\ max} \gg I_{qs\ opt}$ erzeugt werden. Mit diesem Drehmomentimpuls $M_{max}$ kann die Kurbelwelle vor dem eigentlichen Zünden der Verbrennungsmaschine VB im Zeitpunkt Z "losgerissen" werden.

Nach kurzer Zeit (Rotorzeitkonstante) wird dann wieder der Flusswert $\psi_{opt}$ erreicht und durch die Flussregelung auf diesem Wert gehalten, was zur Vorgabe der optimalen Werte von $I_d$ und $I_q$ führt und damit das erforderliche Drehmoment (Durchdrehmoment + Beschleunigungsmoment) zum Starten des Verbrennungsmotors erzeugt $M_{opt} \sim \psi_{opt} \cdot I_{qs\ opt}$.

Die Erfindung kann wie folgt zusammengefasst werden:

Ohne Überlastung bzw. Notwendigkeit einer Vergrößerung der installierten Maschinen- bzw. Energiespeicherkapazität kann auf einfache Weise das Losbrechmoment beim Startvorgang einer mit einem Starter-Generator, insbesondere einer feldorientierten Asynchronmaschine ASM, gekoppelten Verbrennungsmaschine dadurch wesentlich erhöht werden, dass zunächst die feldbildende Vektor-Komponente des Ständerstroms unter entsprechender Reduzierung der drehfeldbildenden Vektor-Komponente des Ständerstroms im Sinne einer Übererregung bis maximal zur Sättigung erhöht und anschließend nach Abschalten der magnetfeldbildenden Vektor-Komponente während der durch die Rotorzeitkonstante bestimmten allmählichen Abnahme der Erregung auf ihren betriebsoptimalen Dauerbetriebswert die drehfeldbildende Vektor-Komponente entsprechend überhöht wird.

## Patentansprüche

1. Verfahren zur impulsartigen Erhöhung des Drehmomentes eines mit feldorientierter Regelung über einen Umrichter gespeisten Asynchronmotors, insbesondere zur Überwindung des Losbrechmomentes einer mit einem Starter-Generator koppelbaren Verbrennungsmaschine, mit zumindest folgenden Verfahrensschritten:

   - zunächst im Vergleich zum betriebsoptimalen Betrieb eine Überhöhung der feldbildenden Vektor-Komponente des Ständerstroms unter entsprechender Minderung der drehmomentbildenden Vektor-Komponente des Ständerstroms,

   - dann im Vergleich zum betriebsoptimalen Betrieb eine Überhöhung der drehmomentbildenden Vektor-Komponente des Ständerstroms unter entsprechender Minderung der feldbildenden Vektor-Komponente,

   - schließlich bei Abfall des Erregerflusses auf einen für den Dauerbetrieb betriebsoptimalen Wert Einstellen der für diesen Betrieb entsprechenden drehmomentbildenden Vektor-Komponente und feldbildenden Vektor-Komponente des Ständerstroms.

2. Verfahren nach Anspruch 1 mit dem Verfahrensschritt:

   - Überhöhung der feldbildenden Vektor-Komponente auf einen Maximalwert entsprechend einer auf Null geminderten drehmomentbildenden Vektor-Komponente des Ständerstroms.

**3.** Verfahren nach Anspruch 1 mit dem Verfahrensschritt:

- Überhöhung der drehmomentbildenden Vektor-Komponente auf einen Maximalwert entsprechend einer auf Null geminderten feldbildenden Vektor-Komponente des Ständerstroms.

**4.** Verfahren nach zumindest einem der Ansprüche 1-3 mit dem Verfahrensschritt:

- Überhöhung der feldbildenden Vektor-Komponente des Ständerstroms entsprechend einem vorgebbaren Rampenverlauf.

**5.** Verfahren nach zumindest einem der vorhergehenden Ansprüche 1-4 mit folgendem Verfahrensschritt:

- Überhöhung der feldbildenden Vektor-Komponente des Ständerstroms unter Ausnutzung einer maximalen Strombelastbarkeit der Asynchronmaschine bzw. eines den Asynchronmotor speisenden Umrichters.

**6.** Verfahren nach zumindest einem der Ansprüche 1-3 mit dem Verfahrensschritt:

- Überhöhung der drehmomentbildenden Vektor-Komponente des Ständerstroms unter Ausnutzung einer maximalen Strombelastbarkeit der Asynchronmaschine bzw. eines den Asynchronmotors speisenden Umrichters.

**7.** Verfahren nach zumindest einem der Ansprüche 1-6 mit folgendem Verfahrensschritt:

- Ankoppeln der Asynchronmaschine unmittelbar, insbesondere untersetzungs- bzw. übersetzungslos, an die Verbrennungsmaschine.

FIG 1

FIG 2

FIG 3

FIG 4

FIG 5

Europäisches
Patentamt

**EUROPÄISCHER RECHERCHENBERICHT**

Nummer der Anmeldung

EP 01 12 0356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 275 000 B1 (NISHIMURA SHINJI) 14. August 2001 (2001-08-14) | 1-6 | H02P21/00 |
| Y | * Spalte 8, Zeile 49 - Spalte 9, Zeile 8; Abbildung 2 * * Spalte 3, Zeile 19 - Zeile 43; Abbildung 1 * | 7 | |
| Y | EP 1 069 310 A (AUDI NSU AUTO UNION AG) 17. Januar 2001 (2001-01-17) * Spalte 4, Zeile 51 - Spalte 5, Zeile 1; Abbildung 1 * * Spalte 4, Zeile 14 * | 7 | |
| A | US 4 845 418 A (CONNER CRAIG R) 4. Juli 1989 (1989-07-04) * Spalte 4, Zeile 50 - Spalte 5, Zeile 4 * * Spalte 5, Zeile 23 - Zeile 33; Abbildung 3D * | 1,4 | |
| A | PATENT ABSTRACTS OF JAPAN vol. 010, no. 150 (E-408), 31. Mai 1986 (1986-05-31) -& JP 61 010986 A (SHINKO DENKI KK), 18. Januar 1986 (1986-01-18) * Zusammenfassung * | 1 | RECHERCHIERTE SACHGEBIETE (Int.Cl.7) H02P |
| A | PATENT ABSTRACTS OF JAPAN vol. 1999, no. 12, 29. Oktober 1999 (1999-10-29) -& JP 11 187700 A (FUJI ELECTRIC CO LTD), 9. Juli 1999 (1999-07-09) * Zusammenfassung * | 1 | |

Der vorliegende Recherchenbericht wurde für alle Patentansprüche erstellt

| Recherchenort | Abschlußdatum der Recherche | Prüfer |
|---|---|---|
| BERLIN | 15. November 2001 | Roy, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 12 0356

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 6275000 | B1 | 14-08-2001 | KEINE | | |
| EP 1069310 | A | 17-01-2001 | DE | 19931963 A1 | 18-01-2001 |
| | | | EP | 1069310 A2 | 17-01-2001 |
| US 4845418 | A | 04-07-1989 | CA | 1284349 A1 | 21-05-1991 |
| | | | EP | 0257628 A2 | 02-03-1988 |
| | | | JP | 63056182 A | 10-03-1988 |
| JP 61010986 | A | 18-01-1986 | JP | 1756724 C | 23-04-1993 |
| | | | JP | 4046074 B | 28-07-1992 |
| JP 11187700 | A | 09-07-1999 | KEINE | | |

EPO FORM P0461

Für nähere Einzelheiten zu diesem Anhang : siehe Amtsblatt des Europäischen Patentamts, Nr. 12/82